# EUROPÄISCHE PATENTANMELDUNG

(11) **EP 0 668 333 A2**
(43) Veröffentlichungstag der Anmeldung: **23.08.1995**
(21) Anmeldenummer: 95101555.1
(22) Anmeldetag: 06.02.1995
(51) Int. Cl.: C09D 101/08, C09D 101/18

(54) **Emulgatorfreie Lackbindemittel in Granulatform und deren Herstellung**

(30) Priorität: 18.02.1994 DE 4405210
(71) Anmelder: WOLFF WALSRODE AG, D-29655 Walsrode (DE)
(72) Erfinder: Dannhorn, Wolfgang, Dr., D-29664 Walsrode (DE); Hoppe, Lutz, Dr., D-29664 Walsrode (DE); Lühmann, Erhard, Dipl.-Ing., D-29699 Bomlitz (DE); Juhl, Hans-Jürgen, Dr., D-29683 Fallingbostel (DE)
(74) Vertreter: Braun, Rolf, Dr.

(57) **Zusammenfassung**

Lackbindemittel in Granulatform, wobei sich die Lackbindemittel in Granulatform zusammensetzen aus 10 - 82 Gew.-% Celluloseester und 18 - 90 Gew.-% Harz und/oder Weichmacher als Phlegmatisierungsmittel.

## Beschreibung

Die Erfindung betrifft blockfeste und rieselfähige Lackbindemittel in Granulatform auf Basis von Celluloseestern, insbesondere von Cellulosenitraten, die frei von Emulgatoren sind, sowie ein Verfahren zu ihrer Herstellung.

Trockenes Cellulosenitrat kann sehr leicht durch Stoß oder Reibung zur Entzündung gebracht werden. Deshalb müssen aufgrund gesetzlicher Bestimmungen handelsübliche Cellulosenitrate entweder mit einem nicht gelatinierenden flüssigen Anfeuchtungsmittel in einer Menge von mindestens 25 Gew.-% oder mit einem gelatinierenden Phlegmatisierungsmittel in einer Konzentration von mindestens 18 Gew.-% behandelt sein, um damit die Gefahren bei Lagerung und Handhabung sowie beim Transport zu verringern.

Die gängigsten nicht gelatinierenden Anfeuchtungsmittel für Cellulosenitrate sind Alkohole, wie Ethanol, Isopropanol oder n-Butanol, aber auch Wasser. Bei der Verarbeitung von NC-haltigen Lacken stören Alkohole allerdings in den üblichen Adsorptionsanlagen, die zur Emissionsreduzierung den Lackieranlagen nachgeschaltet sind. Für Polyurethanlacke eignen sich solche angefeuchteten Cellulosenitrate ebenfalls weniger, da die Anfeuchtungsmittel mit den in Polyurethanlacken eingesetzten Isocyanaten zu niedermolekularen Verbindungen reagieren, die die Qualität des Lackfilms deutlich herabsetzen.

In der DE-A 3 041 085 und in der US-A 3 284 253 werden Cellulosenitrate beschrieben, die als Anfeuchtungsmittel inerte Lösungsmittel (z.B. Toluol) enthalten. Die Herstellung erfolgt mittels eines destillativen Albeitsschrittes, der außerordentlich aufwendig und sicherhheitstechnisch problematisch ist. Bei allen mit nicht gelatinierenden Anfeuchtungsmitteln phlegmatisierten Cellulosenitraten besteht außerdem das Problem der Verdunstung des Anfeuchtungsmittels bzw. der inhomogenen Verteilung infolge Absackens des Anfeuchtungsmittels im Faß.

Eine andere Methode, Cellulosenitrat zu phlegmatisieren ist die Einarbeitung von gelatinierenden Weichmachern. Vornehmlich wird Dibutylphthalat als Weichmacher eingesetzt (siehe DE 1 203 652, DE 1 470-860 und DE 1 570 121). Solche niedermolekularen Weichmacher enthalten keine reaktiven Wasserstoffatome und reagieren daher nicht mit Isocyanaten, jedoch vermindern sie die Qualität der PUR-Lackschicht deutlich. Weitere Nachteile dieser sogenannten Cellulonitrat-Chips sind:
- 1.: hohe Flüchtigkeit des Weichmachers bei höheren Verarbeitungstemperaturen,
- 2.: große Verblockungstendenz bei Chips aus niedrigviskosen Cellulosenitraten,
- 3.: lange Lösezeiten,
- 4.: Migration des niedermolekularen Weichmachers.

Die DE 2 215 624 beschreibt ein Verfahren zur Herstellung polyolmodifizierter Cellulosenitrate, wobei eine wäßrige Emulsion mit einer wäßrigen Cellulosenitratsuspension in Gegenwart einer großen Menge Emulgator (bis 5 Gew.-%) vermischt und erhitzt wird. Nach der Filtration wird der Filterkuchen auf die gewünschte Schichtdicke kalandriert und getrocknet. Die Produkte enthalten sehr viel Emulgatoren, die die Lackeigenschaften, insbesondere die Wasserfestigkeit, verschlechtern.

In der DE 3 836 779 werden Celluloseester-Polyacrylatgranulate beschrieben. Ihre Herstellung erfolgt durch Polymerisation von Acrylsäure bzw. Arylatmonomeren in wäßriger Emulsion in Gegenwart von wenigstens einem Celluloseester. Zur Herstellung der Emulsion werden nicht wasserlösliche Dispergierhilfsmittel verwendet. Diese werden während der Polymerisation in das Granulat eingebaut. Es ist bekannt, daß solche Schutzkolloide die Lackeigenschaften beträchtlich verschlechtern. Ein weiterer Nachteil dieses Verfahrens ist, daß die Polymerisation nicht vollständig abläuft und Restmonomere vorhanden sind. Der Restmonomerenanteil bewirkt einen intensiven Eigengeruch dieser Celluloseester-Polyacrylatgranulate.

Nach einer ähnlichen Methode werden in der DE-A 4 039 195 Lackbindemittelgranulate hergestellt. Zu einer wäßrigen Suspension eines Celluloseesters wird eine Emulsion aus einem Polymeren und einem Monomeren gegeben und anschließend polymerisiert. Zur Herstellung der wäßrigen Emulsion aus Polymer und Monomer müssen Emulgatoren zugegeben werden. Es treten die gleichen Nachteile wie in der DE 3 836 779 auf.

In der DE-A 4 213 878 wird ein Verfahren zur Herstellung von Celluloseester-Polymer-Kombinationen beschrieben, bei dem auf den Einsatz von polymerisierbaren Monomeren verzichtet werden kann. Allerdings ist zur Granulatherstellung wiederum ein Emulgierhilfsmittel notwendig, das die Lackeigenschaften beträchtlich verschlechtert.

Aufgabe der vorliegenden Erfindung ist, blockfeste, rieselfähige Lackbindemittel in Granulatform zur Verfügung zu stellen, die die oben aufgeführten Nachteile nicht aufweisen. Aufgabe ist weiterhin, einen lösungsmittelfreien emulgatorfreien und monomerenfreien Herstellungsprozeß aufzuzeigen.

Überraschenderweise konnten die Aufgaben durch Kombination von Celluloseester-Suspensionen mit wenigstens einer Harz- und/oder Weichermacher-Emulsion gelöst werden.

Vorzugsweise setzen sich die erfindungsgemäßen Lackbindemittel in Granulatform zusammen aus 10-82 Gew.-, insbesondere 30-82 Gew.-% Celluloseester und 18-90 %, insbesondere 18-70 Gew.-% Harz und/oder Weichermacher als Phlegmatisierungsmittel.

Es wurde überraschend gefunden, daß Lackbindemittel in fester Granulatform erhalten werden, wenn man zu einer Celluloseester-Suspension eine Harz- und/oder Weichmacher-Emulsion gibt. Letztere erhält man, wenn das Harz und/oder der Weichmacher freie Säuregruppen besitzt, bevorzugt sind Carboxylgruppen und/oder Sulfogruppen.

Zur Granulatherstellung ist auch der umgekehrte Weg möglich, also die Zugabe der wäßrigen Celluloseester-Suspension zur wäßrigen Harz- und/oder Weichmacher-Emulsion.

Allgemein sind als aufzubringende Harze und/oder Weichmacher Produkte mit Säurezahlen >10 mg KOH/g-Polymer notwendig. Überraschend war weiterhin, daß auch Harze und/oder Weichmacher, die einen Säuregruppenanteil von 0 - 10 mg KOH/g Polymer besitzen, durch Vermischen mit selbstemulgierbaren Polymeren, wie sie z.B. in der DE-A-4 219 768 beschrieben sind, in wäßrige Emulsionen überführt werden können. Unter selbstemulgierbaren Polymeren sind solche Makromoleküle zu verstehen die mit Wasser unter Zuhilfenahme von Dispergierapparaturen Emulsionen ergeben.

Charakteristisch für die Überführung des Harzes und/oder Weichmachers in wäßrige Emulsionen ist, daß kein sonst üblicher Emulgator notwendig ist. Falls notwendig, erfolgt die Emulsionsherstellung durch gezielte Neutralisation mit Alkalien. Zur Herstellung der Emulsion ist auch kein organisches Lösungsmittel notwendig.

Ist das aufzubringende Harz und/oder der Weichmacher selbstemulgierbar, so kann das Harz und/oder der Weichmacher ohne Neutralisation mit Alkalien in eine wäßrige Emulsion überführt werden. Allgemein muß dazu das Harz und/oder der Weichmacher eine Säurezahl von >10 mg KOH/g Produkt haben.

Ist das aufzubringende Harz und/oder der Weichmacher nicht selbstemulgierbar, so kann das Harz und/oder der Weichmacher durch gezielte Neutralisation mit Alkalien, wie z.B. Ammoniak, Ethylamin, Diethylamin, Triethylamin, Triethanolamin, Natriumactetat, Calciumhydrogencarbonat, Ammoniumhydrogenphosphat, Kaliumhydroxid und Natriumhydroxid, besonders geeignet sind Triethanolamin und Ammoniak, in eine wäßrige Emulsion überführt werden. Allgemein muß dazu das Harz und/oder der Weichmacher eine Säurezahl von >10 mg KOH/g Produkt haben.

Liegt die Säurezahl des aufzubringenden Harzes und/oder Weichmachers zwischen 0 und 10 mg KOH/g Produkt, kann durch zusätzliche Zugabe von 0,1 - 8 Gew.-% eines selbstemulgierbaren Polymeren, wie z.B. in der DE-A-4 219 768 beschrieben, und anschließende Neutralisation mit den o.a. Reagenzien das Harz und/oder der Weichmacher in eine Emulsion überführt werden.

Die Emulgierung erfolgt durch Verrührung des Harzes und/oder Weichmachers nach bekannten Verfahren der Emulsionstechnik. Als Emulgiergeräte eignen sich Dissolver, Ultraschallmischer, Düsenmischer, Durchflußdispergatoren sowie Kombinationen dieser Methoden.

Als Harze und/oder Weichmacher sind folgende Produktgruppen geeignet: gesättigte Polyester, ungesättigte Polyester, Alkydharze, Polyether, Polyacrylate, Ketonharze, Maleinatharze, Polycaprolactone, Polyurethane, Epoxidharze, Polyvinylharze, Aminoharze, Phenolharze, Silikonharze, Phthalate, Adipate, Sebazate, Phosphorsäureester, Acelainsäureester, Ester höherer Fettsäuren, Glykolsäureester, Trimellitsäureester, Sulfonsäureester, Citronensäureester, Sulfonsäureamide, epoxidierte Weichmacher, wie epoxidierte Ester natürlicher Fettsäuren, und epoxidierte Triglycride, wie epoxidiertes Sojabohnenöl oder Leinöl, Naturharzester, wie die Ester von Kolophonium bzw. hydriertem Kolophonium, Zuckerderivate, wie Saccharoseacetoisobutyrat, polymerisierbare Weichmacher und flammhemmende Weichmacher, wie Trichlorbutylphosphat, Trichlorethylphosphat oder Diphenyloctylphosphat sowie ethoxilierte Derivate der oben aufgeführten Produkte, wie z.B. ethoxilierte Phosphorsäureester.

Als Celluloseester eignen sich alle Celluloseester, hergestellt aus anorganischen und organischen Säuren und Cellulose, die wasserunlöslich sind. Besonders bevorzugt sind Cellulosenitrate mit einem Stickstoffgehalt von 10-12,6 Gew.-%.

Zur Herstellung der erfindungsgemäßen Lackbindemittel in Granulatform gibt man vorzugsweise die Emulsion aus den aufzubringenden Harzen und/oder Weichmachern zur Celluloseester-Suspension bei 5 bis 40°C besonders bevorzugt bei 10 bis 30°C. Nach dem Aufziehen des Harzes und/oder Weichmachers auf die Celluloseesterfaser erfolgt eine Stabilisation des Celluloseestergranulats bei Temperaturen zwischen 20 bis 100°C vorzugsweise 40 bis 90°C, während einer Zeit von 20 min bis 3 h, vorzugsweise 30 min bis 2 h.

Wurde eine mit Alkalien neuralisierte Harz- und/oder Weichmacher-Emulsion eingesetzt, ist die Mischung aus Emulsion und Suspension bei Verwendung von Cellulosenitrat-Suspension mit organischen bzw. anorganischen Säuren vor und/oder während der Aufheizphase anzusäurern. Als organische Säure eignet sich beispielsweise Essigsäure, Propionsäure, Adipinsäure, Glutarsäure, Citronensäure, Ascorbinsäure und Benzoesäure. Es können auch alle anorganischen Säuren, wie Phosphorsäure, Schwefelsäure, Salpetersäure oder Salzsäure, eingesetzt werden. Besonders bevorzugt sind Ascorbinsäure, Citronensäure und Phosphorsäure.

Die erfindungsgemäßen Lackbindemittel in Granulatform lassen sich durch gängige Separationsmethoden, wie Zentrifugieren oder Filtrieren, trennen. Die Trocknung erfolgt in bekannten Horden-, Band- oder Wirbelbetttrocknern.

Die resultierenden Lackbindemittel in Granulatform zeichnen sich durch enge Korngrößenverteilungen und hervorragender Rieselfähigkeit aus. Im Vergleich zu anderen Celluloseesterhaltigen Produkten ist der Feinstaubanteil sehr gering.

Je nach eingesetztem Harz und/oder Weichmacher eignen sich die erfindungsgemäßen Lackbindemittel zur Herstellung von Lacken unterschiedlicher Anwendungsgebiete, wie z.B. für Holz, Metall, Kunststoff, Papier, Folie, Leder und magnetische Datenträger. Die Lackbindemittel sind mit weiteren Lackbestandteilen verträglich. Beim Einsatz von hydroxylgruppenhaltigen Polymeren als Harz lassen sich nach der Isocyanatreaktion sowohl mit aliphatischen, aromatischen, araliphatischen und verkappten Isocyanaten sehr hochwertige Polyurethan-Lacküberzüge erhalten. Ein weiteres Einsatzgebiet für die Lackbindemittel ist ihre Verwendung zur Beschichtung von Verpackungsmaterial.

### Beispiel 1

40 g eines ungesättigten, wasseremulgierbaren Polyesters (Beispiel 3 der DE-A 4 219 768) bestehend aus 0,03 mol Polyethylenglykol 1500, 0,55 mol Propan-1,2-diol, 0,40 mol Benzyalkohol, 0,04 mol Trimethylol-propan, 0,60 mol Trimethylolpropandiallylether und 1,00 mol Maleinsäureahydrid mit einer Säurezahl von 21 mg KOH/g Polymer werden mit einem Dissolver bei Raumtemperatur in 60 g Wasser emulgiert. Die Rührgeschwindigkeit beträgt 500 Upm.

Diese Emulsion wird in eine Suspension aus 160 g Cellulosenitrat der Normtype E 34 und 740 g Wasser bei Raumtemperatur eingerührt. Nach der Emulsionszugabe wird auf 70°C aufgeheizt. Bei 40°C wird mit 1 g Citronensäuremonohydrat angesäuert. Hat der Ansatz 70°C erreicht, wird bei dieser Temperatur weitere 30 min gerührt. Nach Abkühlen auf Raumtemperatur wird die entstandene Granulatsuspension filtriert und der Feststoff in einem Wirbelbetttrockner bei 50°C bis zur Gewichtskonstanz getrocknet. Das Cellulosenitrat-Polyestergranulat ist freifließend und in Ethylactetat klar löslich. Die Ausbeute beträgt 99,4 % der Theorie.

### Beispiel 2

Wiederholung von Beispiel 1, aber anstelle der Cellulosenitrat Normtype E 34 wird die Normtype M 27 verwendet. Es wird ein Cellulosenitrat-Polyestergranulat erhalten, das freifließend und in Ethylacetat klar löslich ist. Die Ausbeute beträgt 99,1 % der Theorie.

### Beispiel 3

Wiederholung von Beispiel 1, aber anstelle von 160 g werden nur 80 g Cellulosenitrat der Normtype E 34 eingesetzt. Nach dem Filtrieren und Trocknen bei 50°C bis zur Gewichtskonstanz wird ein Celluloseester-Polyestergranulat mit der Zusammensetzung Cellulosenitrat 60 Gew.-%/Polyester 40 Gew.-% erhalten, Das Granulat ist freifließend und in Ethylacetat klar löslich. Die Ausbeute beträgt 98,3 % der Theorie.

### Beispiel 4

40 g Desmophen®1300 (gesättigter Polyester der Bayer AG) mit einer Säurezahl von 20 mg KOH/g Polymer werden auf 100°C aufgeheizt und in 60 g 35°C-warmes, 0,2 %iges Ammoniakwasser emulgiert. Die Rührgeschwindigkeit des Dissolvers beträgt 500 Upm. Nach der Desmophen-Zugabe wird auf 20°C abgekühlt und weitere 30 min bei 50 Upm geschert.

Diese Desmophen®-1300-Emulsion wird bei Raumtemperatur unter Rühren bei 500 Upm zügig zu einer NC-Suspension, bestehend aus 160 g Cellulosenitrat der Normtype A 30 und 740 g Wasser, zugegeben. Nach der Zugabe wird aufgeheizt. Bei 40°C wird mit 2 g Citronensäuremonohydrat angesäuert und auf 80°C aufgeheizt. Diese Temperatur wird 30 min gehalten. Nach dem Abkühlen auf Raumtemperatur wird das Cellulosenitrat-Desmophen®-1300-Granulat filtriert und bei 50°C bis zur Gewichtskonstanz getrocknet, Das erhaltene Granulat ist freifließend und löst sich klar in Ethylacetat. Die Ausbeute beträgt 98,9 % der Theorie.

### Beispiel 5

140 g eines ungesättigten Polyesters, bestehend aus 26,60 Gew.-% Propylenglykol, 31,90 Gew.-% Maleinsäureanhydrid, 3,7 Gew.-% Trimethylolpropan und 37,8 Gew.-% Butyldiglykol mit einer Säurezahl von 27 mg KOH/g Polymer, werden mit 122 g Wasser und 18 g Triethanolamin versetzt und mit einem Dissolver 30 min bei 750 Upm emulgiert.

240 g dieser Emulsion werden in eine Suspension aus 480 g Cellulosenitrat Normtype A 30, 2.274,5 g Wasser und 2,6 g 85 %ige Phosphorsäure bei 500 Upm eingerührt, anschließend auf 70°C aufgeheizt und diese Temperatur 2 h lang gehalten. Nach dem Filtrieren und Trocknen bei 50°C bis zur Gewichtskonstanz erhält man ein rieselfähiges Granulat, das sich in Ethylacetat klar löst. Die Ausbeute beträgt 98,2 % der Theorie.

### Beispiel 6

90 g SAIB (Sucroseacetoisobutyrat der Fa. Eastman) mit einer Säurezahl von 0 mg KOH/g Polymer werden mit 10 g des in Beispiel 1 verwendeten, ungesättigten, wasseremulgierbaren Polyesters gemischt und auf 100°C erwärmt. In diese Mischung wird 83 g 0,3 %iges Ammoniakwasser bei 1 200 Upm mittels eines Dissolvers eindispergiert. Nach 10 min Rühren ist die Emulsion gebrauchsfertig.

51 g dieser Emulsion werden in eine Suspension aus 112 g Cellulosenitrat der Normtype A 30 und 536 g Wasser eingerührt. Anschließend wird auf 90°C aufgeheizt und diese Temperatur 90 min gehalten. Während der Aufheizphase werden bei 40°C 0,5 g Citronensäure zugesetzt. Nach dem Abkühlen wird der Festkörper durch Filtrieren abgtrennt und anschließend bei 50°C bis zur Gewichtskonstanz getrocknet. Das mittelkörnige Granulat ist rieselfähig und löst sich klar in Ethylacetat auf. Die Ausbeute beträgt 98,3 % der Therorie.

### Beispiel 7

140 g eines ungesättigten Polyesters, bestehend aus 32,8 Gew.-% Maleinsäureanhydrid und 67,2 Gew.-% 1,6-Hexandiol mit einer Säurezahl von 34 mg KOH/g Polymer, werden mit 122 g Wasser und 18 g Triethanolamin versetzt und mit einem Dissolver 30 min bei 750 Upm emulgiert.

240 g dieser Emulsion werden in eine Suspension aus 480 g Cellulosenitrat der Normtype A 30, 2.274,5 g Wasser und 2,6 g 85 %ige Phosphorsäure bei 500 Upm eingerührt, anschließend auf 70°C aufgheizt und diese Temperatur 2 h lang gehalten. Nach dem Filtrieren und Trocknen bei 50°C bis zur Gewichtskonstanz erhält man ein rieselfähiges Granulat, das sich in Ethylacetat Klar löst. Die Ausbeute beträgt 97,6 % der Theorie.

### Beispiel 8

Zu 60 g eines ungesättigten Polyesters, bestehend aus 16,1 Gew.-% Ethylenglykol, 46,3 Gew.-% Maleinsäureanhydrid, 2,5 Gew.-% Trimethylolpropan und 35,1 Gew.-% 1-Butanol mit einer Säurezahl von 36 mg KOH/g Polymer, werden 6 g Triethanolamin gegeben. Diese Mischung wird mit 54 g Wasser versetzt und mit einem Dissolver 3 min bei 1000 U/min emulgiert.

Die so hergestellte Emulsion wird in eine Suspension, bestehend aus 312,7 g Cellulosenitrat Normtype A 30, 1558,3 g Wasser und 2,0 g 85 %ige Phosphorsäure, bei 750 U/min eingerührt. Anschließend wird bei 500 U/min auf 80°C aufgeheizt und diese Temperatur 1,5 h lang gehalten. Nach dem Filtrieren und Trocknen bei 60°C bis zur Gewichtskonstanz erhält man ein rieselfähiges Granulat in 98 %iger Ausbeute. Das Granulat ist in 20 %iger Konzentration in Ethanol klarlöslich.

### Vergleichsbeispiel 1

40 g 100-°C-heißes Desmophen®1300 (gesättigter Polyester der Bayer AG) mit einer Säurezahl von 20 mg KOH/g Polymer werden mit einem Dissolver in 60 g 35-°C-warmes Wasser bei 500 Upm emulgiert. Nach dem Ausschalten des Dissolvers bilden sich eine organische und eine wäßrige Phase aus. Mit dieser Mischung kann kein Granulat hergestellt werden.

### Vergleichsbeispiel 2

90 g SAIB (Fa. Eastman) mit einer Säurezahl von 0 mg KOH/g Polymer werden auf 100°C aufgheizt und mittels eines Dissolvers bei 1 000 Upm mit 83 g einer 0,3 %igen Ammoniakwasserlösung vermischt. Es bildet sich keine Emulsion aus. Die Mischung ist instabil und eignet sich nicht zur Herstellung von Granulaten.

## Patentansprüche

1. Lackbindemittel in Granulatform, dadurch gekennzeichnet, daß sich die Lackbindemittel in Granulatform zusammensetzen aus 10 - 82 Gew.-% Celluloseester und 18 - 90 Gew.-% Harz und/oder Weichmacher als Phlegmatisierungsmittel.

2. Lackbindemittel in Granulatform nach Anspruch 1, dadurch gekennzeichnet, daß der Celluloseester, bevorzugt Cellulosenitrat mit einem Stickstoffgehalt von 10 - 12,6 Gew.-% ist.

3. Lackbindemittel in Granulatform nach den vorhergehenden Ansprüchen dadurch gekennzeichnet, daß das aufzubringende Harz und/oder Weichmacher Säurezahlen von >10 mg KOH/g Polymer besitzt und selbstemulgierbar ist.

4. Lackbindemittel in Granulatform nach den vorhergehenden Ansprüchen dadurch gekennzeichnet, daß nicht selbstemulgierbare Harze und/oder Weichmacher mit Säurezahlen >10 mg KOH/g Polymer durch Neutralisation mit basisch reagierenden Substanzen emulgiert werden können.

5. Lackbindemittel in Granulatform nach den vorhergehenden Ansprüchen dadurch gekennzeichnet, daß Harze und/oder Weichmacher mit Säurezahlen von 0 - 10 mg KOH/g Polymer durch Zugabe von selbstemulgierbaren Harzen in einer Menge von 0,1 - 8 Gew.-% und anschließender Neutralisation mit basisch reagierenden Substanzen emulgiert werden können.

6. Verfahren zur Herstellung von Lackbindemittel in Granulatform nach den vorhergehenden Ansprüchen dadurch gekennzeichnet, daß wäßrige Celluloseester-Suspensionen mit Harz- und/oder Weichmacher-Emulsionen vermischt werden, wobei kein Emulgator, kein Monomer und kein organisches Lösungsmittel vorhanden ist/sind.

7. Lackbindemittel in Granulatform nach den vorhandenen Ansprüchen dadurch gekennzeichnet, daß zur Herstellung der Granulate mit anorganischen und/oder organischen Säuren angesäuert wird.

8. Lackbindemittel in Granulatform nach den vorhergehenden Ansprüchen dadurch gekennzeichnet, daß sie zur Oberfächenbeschichtung verwendet werden können.

9. Verwendung der Lackbindemittel in Granulatform gemäß einem der vorstehenden Ansprüche zur Herstellung von Lacken.
